# FASCICULE DE BREVET EUROPEEN

(11) **EP 3 697 997 B1**
(45) Date de publication et mention de la délivrance du brevet: **13.11.2024**
(21) Numéro de dépôt: 18793250.4
(22) Date de dépôt: 04.10.2018
(51) Int. Cl.: E05C 21/00

(54) **DISPOSITIF D'ÉCARTEMENT D'UN ÉLÉMENT OUVRANT PAR RAPPORT À UN ÉLÉMENT FIXE, NOTAMMENT D'UN VÉHICULE AUTOMOBILE**
VORRICHTUNG ZUR ABSTANDSHERSTELLUNG VON EINEM ÖFFNUNGSELEMENT ZU EINEM STATIONÄREN ELEMENT, INSBESONDERE ZU EINEM KRAFTFAHRZEUG
DEVICE FOR SPACING AN OPENING ELEMENT APART FROM A STATIONARY ELEMENT, IN PARTICULAR OF A MOTOR VEHICLE

(30) Priorité: 19.10.2017 FR 1759825
(43) Date de publication de la demande: 26.08.2020
(73) Titulaire: Exsto Thermoplastics, 26100 Romans Sur Isère (FR)
(72) Inventeur: PERCHE, Stéphane, 26260 Saint Bardoux (FR); LEON, Bertrand, 38210 Tullins (FR)
(74) Mandataire: Germain Maureau
(86) Numéro de dépôt international: PCT/FR2018/052455
(87) Numéro de publication internationale: WO 2019/077224

(56) Documents cités:
- WO-A1-2007/045757
- US-A1- 2010 192 652
- US-B1- 6 360 407

## Description

L'invention a pour objet un dispositif de maintien en position entrebâillée d'un ouvrant sur un élément fixe d'une caisse d'un véhicule automobile lors de sa fabrication.

Un véhicule automobile est fabriqué sur une ligne de fabrication qui réalise une étape d'assemblage des éléments, comme des éléments ouvrants par exemple, sur une caisse de véhicule formant ainsi une carrosserie de véhicule complète.

Une tolérance de quelques millimètres, généralement +/-2mm, est acceptée lors cet assemblage. Ainsi, une position relative d'un élément par rapport à un autre varie de quelques millimètres d'un véhicule à l'autre.

Il est connu d'utiliser des dispositifs maintenant les éléments ouvrants dans une position entrebâillée par rapport à l'élément de caisse afin de permettre notamment une ouverture et une fermeture aisées de l'ouvrant sur la ligne de fabrication.

Plus particulièrement, le document WO2014170610 divulgue un dispositif comportant un organe de retenue destiné à coopérer avec un organe de maintien, l'organe de retenue étant destiné à être fixé sur une partie d'un élément ouvrant et un organe de maintien sur une partie fixe de carrosserie, ou inversement.

Pour mettre l'élément ouvrant en position entrebâillée, l'organe de maintien vient au contact d'un côté de contact de l'organe de retenue. Puis, l'organe de maintien exerce un effort de fermeture de manière à déformer élastiquement l'organe de retenue et de venir en contact avec un côté opposé au côté de contact.

Inversement, pour mettre l'élément ouvrant en position ouverte, l'organe de maintien exerce un effort d'ouverture de manière à déformer élastiquement l'organe de retenue et ne plus être retenu par l'organe de retenue.

L'effort d'ouverture est dépendant d'une géométrie de l'organe de retenue et d'une position relative de l'organe de retenue par rapport à l'organe de maintien.

Ainsi, la tolérance acceptée lors de l'assemblage de l'élément ouvrant par rapport à la caisse du véhicule entraine une variation de l'effort d'ouverture à appliquer entre deux véhicules ou entre deux éléments ouvrants d'un même véhicule. Des dispositifs de maintien en position entrebâillée sont par ailleurs divulgués dans les documents US 6 360 407 et WO 2007045757.

L'invention a pour objet un dispositif dont l'effort d'ouverture est indépendant d'une position relative de l'élément ouvrant par rapport à la caisse du véhicule.

L'invention porte sur un dispositif de maintien en position entrebâillée d'un élément ouvrant sur une partie fixe d'une caisse d'un véhicule automobile, comprenant un élément d'écartement prévu pour être fixé sur une partie fixe de la caisse du véhicule ou sur l'élément ouvrant, cet élément d'écartement comprenant une embase prévue pour une fixation de l'élément d'écartement sur la partie fixe ou sur l'ouvrant,
caractérisé en ce que l'élément d'écartement comprend :
- un organe de liaison rattaché à l'embase et comportant une zone élastiquement déformable conçue pour se déformer sous l'action de contraintes exercées par un organe de maintien présenté par l'élément ouvrant (200) ou la partie fixe,
- un organe de retenue rattaché à l'organe de liaison et comportant une zone élastiquement déformable conçue pour se déformer sous l'action de contraintes exercées par l'organe de maintien.

Lorsque le dispositif est fixé sur la partie fixe de la caisse, l'organe de maintien présenté par l'élément ouvrant, tel qu'un bord ou une arête par exemple, coopère avec l'élément d'écartement de manière à maintenir ledit élément ouvrant dans une position entrebâillée par rapport à la partie fixe de la caisse.

A l'inverse, lorsque le dispositif est fixé sur l'élément ouvrant, l'organe de maintien présenté par la partie fixe, tel qu'un bord ou une arête par exemple, coopère avec l'élément d'écartement de manière à maintenir ledit élément ouvrant dans une position entrebâillée par rapport à la partie fixe de la caisse.

On définit une position ouverte lorsque l'élément d'écartement et l'organe de maintien ne coopèrent pas, c'est-à-dire lorsqu'ils ne sont pas au contact l'un de l'autre.

Pour mettre l'élément ouvrant dans une position entrebâillée par rapport à la caisse du véhicule, un opérateur ou un robot approche l'élément ouvrant de la caisse de sorte à mettre en contact l'organe de maintien avec l'organe de retenue. Si l'opérateur exerce un effort de fermeture supérieur à un effort de fermeture prédéterminé, l'organe de maintien déforme élastiquement l'organe de retenue et l'organe de liaison de manière concomitante ou successive. L'élément ouvrant est alors bloqué dans une position entrebâillée.

Un assemblage des éléments ouvrant par rapport à la caisse du véhicule est réalisé avec une certaine tolérance. Ainsi une position relative de l'élément ouvrant par rapport à la caisse du véhicule, et donc une position relative des deux éléments du dispositif, varient selon l'élément ouvrant considéré.

La déformation de la zone élastiquement déformable de l'organe de liaison par son contact avec l'organe de maintien permet une adaptation du dispositif à la position relative de l'organe de maintien. La zone élastiquement déformable de l'organe de liaison est dimensionnée pour compenser l'écart de l'élément ouvrant par rapport à la caisse du véhicule, dans la mesure où il se trouve dans l'intervalle de tolérance.

Ainsi, la déformation de l'organe de liaison positionne l'organe de retenue de manière identique par rapport à l'organe de maintien quelle que soit la position initiale de l'élément ouvrant par rapport à la caisse du véhicule dès l'instant où l'éventuel décalage se situe dans l'intervalle de tolérance. La position relative de l'organe de retenue par rapport à l'organe de maintien est de ce fait rendue indépendante de la position relative des deux éléments du dispositif.

Pour mettre l'élément ouvrant dans une position ouverte par rapport à la caisse du véhicule, l'opérateur exerce sur l'élément ouvrant un effort d'ouverture supérieur à un effort d'ouverture prédéfini de manière à ce que l'organe de maintien déforme élastiquement l'organe de retenue. L'élément ouvrant est alors en position ouverte.

Ainsi, grâce au dispositif selon l'invention, l'effort d'ouverture à exercer sur l'élément ouvrant pour le déloger de l'organe de retenue est sensiblement identique quelle que soit la position initiale de l'élément ouvrant par rapport à la caisse du véhicule.

Selon une caractéristique de l'invention, la zone élastiquement déformable de l'organe de liaison est destinée à permettre le pivotement de l'organe de liaison par rapport à un axe de rotation.

Selon une caractéristique de l'invention, la zone élastiquement déformable de l'organe de retenue est destinée à permettre le pivotement de l'organe de retenue par rapport à un axe de rotation.

Ainsi, l'organe de liaison et l'organe de retenue sont déformables élastiquement par pivotement.

Selon une caractéristique de l'invention, l'axe de rotation de l'organe de liaison est parallèle à l'axe de rotation de l'organe de retenue.

Ainsi, la déformation de l'organe de liaison et la déformation de l'organe de retenue se réalisent dans le même plan.

Selon une caractéristique de l'invention, l'organe de retenue est une élongation comportant une extrémité libre.

Ainsi, l'organe de retenue comprend une extrémité libre et une extrémité reliée à l'organe de liaison.

Selon une caractéristique de l'invention, l'organe de retenue présente au moins une protubérance à l'extrémité libre.

Ainsi, l'organe de maintien est retenu en position entrebâillée par la protubérance.

Préférentiellement, la zone élastiquement déformable de l'organe de retenue est positionnée à une extrémité opposée de l'extrémité libre.

Ainsi, la zone élastiquement déformable de l'organe de retenue rattache l'organe de retenue à l'organe de liaison.

Selon une autre réalisation, la zone élastiquement déformable de l'organe de retenue est positionnée sensiblement au milieu de l'élongation.

Selon une caractéristique de l'invention, l'organe de liaison est une élongation comportant une extrémité libre.

Ainsi, l'organe de liaison comprend une extrémité libre et une extrémité reliée à l'embase.

Selon une caractéristique de l'invention, l'organe de liaison entoure l'organe de retenue.

Selon une caractéristique de l'invention, l'organe de liaison comprend au moins une butée de fin de course permettant d'interdire à l'élément ouvrant de venir dans une position complètement fermée sur la caisse du véhicule, ou du moins potentiellement jusqu'au contact de la caisse du véhicule.

Préférentiellement, la zone élastiquement déformable de l'organe de liaison est positionnée à une extrémité opposée de l'extrémité libre.

Ainsi, la zone élastiquement déformable de l'organe de liaison rattache l'organe de liaison à l'embase.

Selon une autre réalisation, la zone élastiquement déformable de l'organe de liaison est positionnée sensiblement au milieu de l'élongation.

Selon un mode de réalisation, la zone élastiquement déformable de l'organe de liaison est conçue de manière à offrir une résistance différente aux contraintes exercées par l'organe de maintien présenté par la partie fixe ou l'élément ouvrant que la zone élastiquement déformable de l'organe de retenue.

L'invention sera mieux comprise, grâce à la description ci-après, qui se rapporte à un ou plusieurs modes de réalisation selon la présente invention, donné à titre d'exemples non limitatifs et expliqués avec référence aux dessins schématiques annexés, dans lesquels :
- les figures 1 à 3 sont des représentations en perspective d'un élément d'écartement d'un dispositif selon l'invention ;
- les figures 4 et 5 sont des représentations schématique en perspective de l'élément d'écartement selon l'invention positionné sur un véhicule automobile.

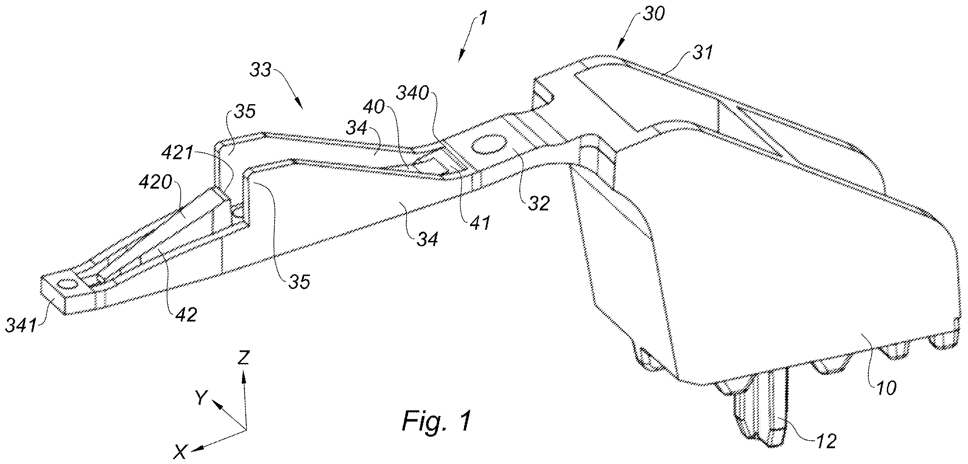

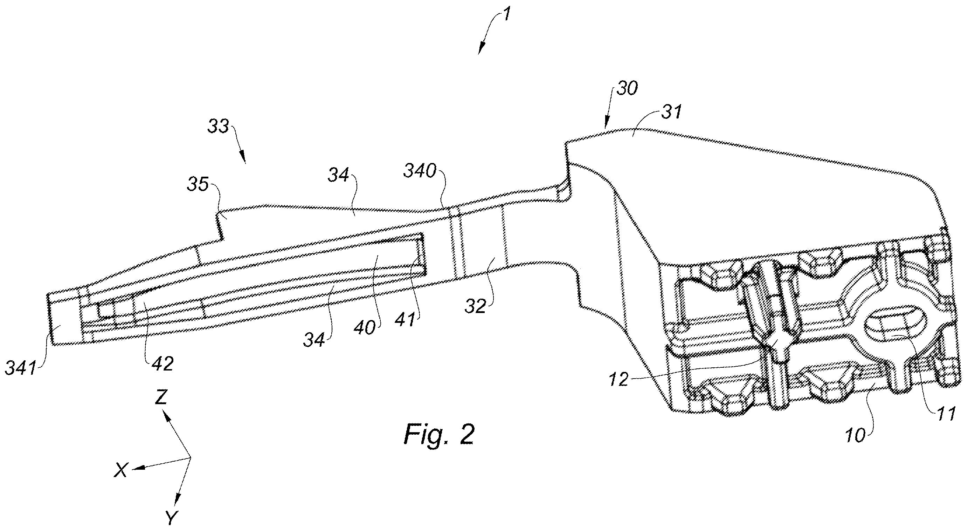

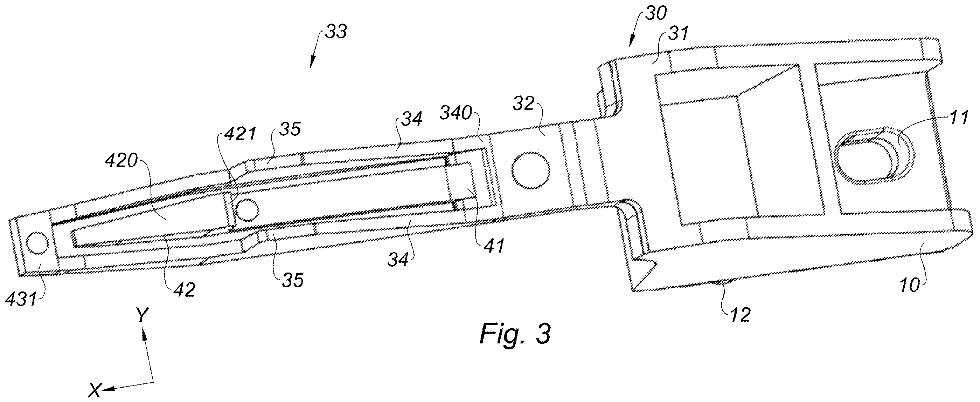

Les figures 1 à 3 représentent des vues en perspective d'un élément d'écartement 1 d'un dispositif 100 selon l'invention. L'élément d'écartement 1 présente une embase 10 comprenant un orifice oblong 11 pour une vis de fixation (non représentée) et un corps de guidage 12 allongé. L'embase 10 est prolongée par un organe de liaison 30.

L'organe de liaison 30 forme une élongation comprenant une première portion 31 reliant l'embase 10 à une zone élastiquement déformable 32 et une deuxième portion 33 prolongeant la zone élastiquement déformable 32.

On définit par la suite qu'un axe Z du premier élément 1 du dispositif 100 est un axe transversal à un axe d'élongation de l'embase 10.

On définit par la suite qu'un axe X du premier élément 1 du dispositif 100 est un axe d'élongation de la deuxième portion 33.

On définit par la suite qu'un axe Y du premier élément 1 du dispositif 100 est un axe perpendiculaire aux axes X et Z.

La zone élastiquement déformable 32 de l'organe de liaison 30 a une épaisseur selon l'axe Z faible par rapport à une longueur selon l'axe X permettant ainsi une déformation de l'organe de liaison par rotation selon l'axe Y.

La deuxième portion 33 est une élongation formée par deux bras 34 symétriques reliés par une première extrémité 340 à la zone élastiquement déformable 32 et entre eux à une seconde extrémité 341. La seconde extrémité 341 est une extrémité libre. Les bras 34 définissent entre eux un espace.

Chaque bras 34 comprend une butée 35 positionnée sensiblement au milieu du bras 34 et s'étendant selon l'axe Z.

Chaque bras 34 a une forme arquée entre la seconde extrémité 341 et la butée 35 de sorte qu'une épaisseur des bras 34 selon l'axe Z augmente progressivement de la seconde extrémité 341 vers la butée 35.

La première extrémité 340 des bras 34 est reliée à un organe de retenue 40 s'étendant selon l'axe X. L'organe de retenue 40 présente une forme allongée munie d'une première extrémité et d'une deuxième extrémité libre.

La première extrémité de l'organe de retenue 40 comprend une zone élastiquement déformable 41 dont une épaisseur selon l'axe Z est faible par rapport à une longueur selon l'axe X, permettant ainsi une déformation de l'organe de retenue 40 par rotation selon l'axe Y.

L'extrémité libre de l'organe de retenue 40 est munie d'une protubérance 42. La protubérance 42 présente un côté de contact 420 et une surface de retenue 421.

Le côté de contact 420 a une épaisseur selon l'axe Z qui augmente progressivement de l'extrémité libre vers un centre de l'organe de retenue 40.

La surface de retenue 421 est sensiblement perpendiculaire à l'organe de retenue 40.

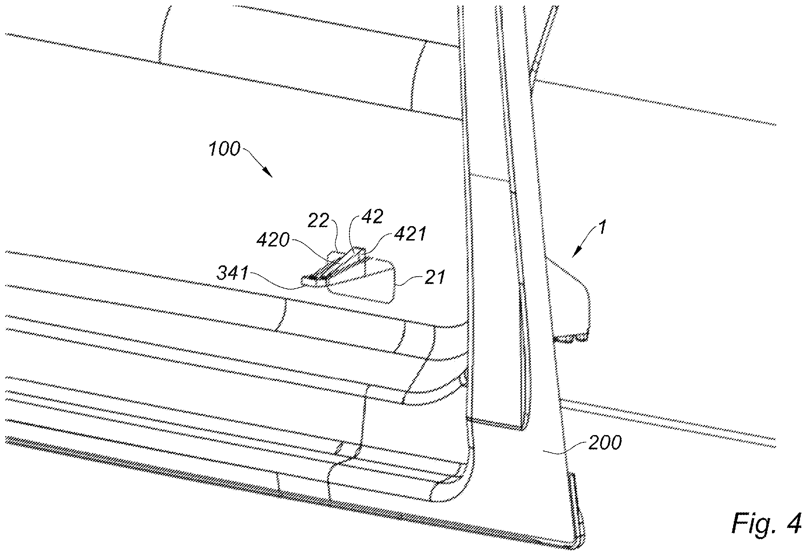

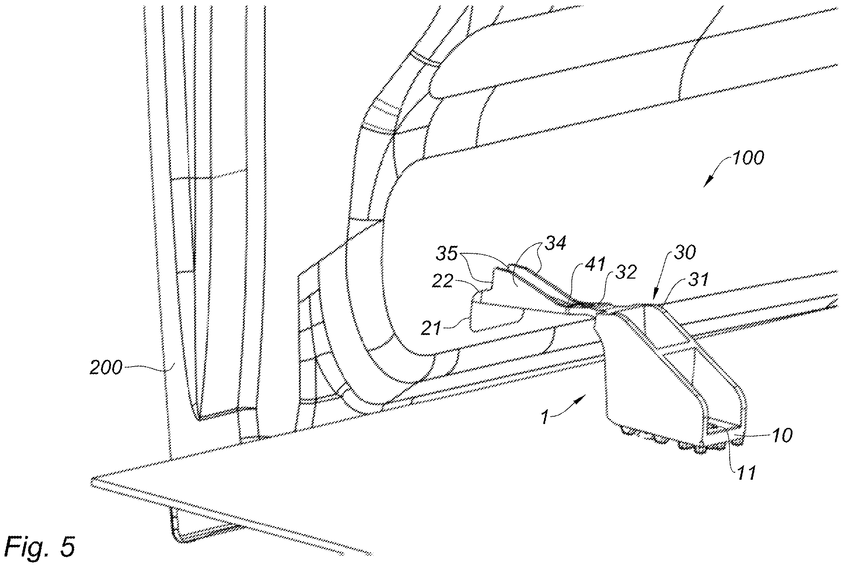

Lorsque le dispositif 100 est installé sur un véhicule comme on peut le voir sur les figures 4 et 5, un opérateur introduit le corps de guidage 12 de l'embase 10 de l'élément d'écartement 1 dans un orifice (non représenté) d'une partie fixe d'un châssis du véhicule. Ensuite, l'opérateur pivote la vis de fixation de manière à fixer provisoirement l'élément d'écartement 1 sur le véhicule.

L'élément ouvrant 200 présente un orifice 21 à section sensiblement rectangulaire prévu pour coopérer avec l'élément d'écartement 1. Cet orifice 21 comporte un bord 22 prévu pour faire office d'organe de maintien en fonctionnement.

Plus précisément, lorsque l'opérateur approche l'élément ouvrant 200 du châssis du véhicule en exerçant un effort de fermeture, l'élément d'écartement 1 du dispositif 100 est introduit dans l'orifice 21. L'organe de maintien 22 vient alors au contact de la seconde extrémité 341 de la deuxième portion 33. Puis l'organe de maintien 22 glisse contre la forme arquée de chaque bras 34 de manière à déformer la deuxième portion 33 au niveau de la zone élastiquement déformable 32. L'organe de maintien 22 glisse également contre le côté de contact 420 de l'organe de retenue 40, déforme l'organe de retenue 40 au niveau de la zone élastiquement déformable 41 puis vient au contact de la surface de retenue 421.

Ainsi, l'organe de maintien 22 est bloqué dans une position entrebâillée entre les butées 35 de l'organe de liaison 30 d'une part, et la protubérance 42 de l'organe de retenue 40 d'autre part.

La déformation de l'organe de liaison 30 permet d'adapter le dispositif 100 à une position relative de l'élément ouvrant 200 par rapport à une partie fixe du châssis du véhicule.

L'organe de retenue 40 est alors dans une position de référence par rapport à l'organe de maintien 22. La position de référence est indépendante de la position relative de l'élément ouvrant 200 par rapport à une partie fixe du châssis du véhicule.

Lorsque l'opérateur exerce un effort d'ouverture ayant une valeur prédéfinie, l'organe de maintien 22 déforme l'organe de retenue 40 au niveau de la zone élastiquement déformable 41 de manière à libérer l'organe de maintien et à mettre l'élément ouvrant 200 dans une position ouverte.

L'organe de retenue 40 étant dans la position de référence par rapport à l'organe de maintien 22, l'effort d'ouverture que doit exercer l'opérateur est prédéfini par la dimension selon l'axe Z de la surface de retenue 421 et la raideur de la zone élastiquement déformable 41.

L'effort d'ouverture est identique quelle que soit la position relative de l'élément ouvrant 200 par rapport à une partie fixe du châssis du véhicule.

Ainsi l'effort d'ouverture est déterminé à la conception du dispositif 100 et est identique quelque soit le véhicule ou l'ouvrant sur lequel est positionné le dispositif 100.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention, le domaine de protection de l'invention étant défini par les revendications.

## Revendications

1. Dispositif (100) de maintien en position entrebâillée d'un élément ouvrant (200) sur une partie fixe d'une caisse d'un véhicule automobile, comprenant un élément d'écartement (1) prévu pour être fixé sur une partie fixe de la caisse du véhicule ou sur l'élément ouvrant (200), cet élément d'écartement (1) comprenant une embase (10) prévue pour une fixation de l'élément d'écartement (1) sur la partie fixe ou sur l'élément ouvrant (200),
**caractérisé en ce que** l'élément d'écartement (1) comprend :
- un organe de liaison (30) rattaché à l'embase (10) et comportant une zone élastiquement déformable (32) conçu pour se déformer sous l'action de contraintes exercées par un organe de maintien présenté par l'élément ouvrant (200) ou la partie fixe,
- un organe de retenue (40) rattaché à l'organe de liaison (30) et comportant une zone élastiquement déformable (41) conçue pour se déformer sous l'action de contraintes exercées par l'organe de maintien.

2. Dispositif (100) de maintien en position entrebâillée selon la revendication 1, dans lequel la zone élastiquement déformable (32) de l'organe de liaison (30) est destinée à permettre le pivotement de l'organe de liaison (30) par rapport à un axe de rotation.

3. Dispositif (100) de maintien en position entrebâillée selon l'une quelconque des revendications précédentes, dans lequel la zone élastiquement déformable (41) de l'organe de retenue (40) est destinée à permettre le pivotement de l'organe de retenue (40) par rapport à un axe de rotation.

4. Dispositif (100) de maintien en position entrebâillée selon les revendications 2 et 3, dans lequel l'axe de rotation de l'organe de liaison (30) est parallèle à l'axe de rotation de l'organe de retenue (40).

5. Dispositif (100) de maintien en position entrebâillée selon l'une quelconque des revendications précédentes, dans lequel l'organe de retenue (40) est une élongation comportant une extrémité libre.

6. Dispositif (100) de maintien en position entrebâillée selon l'une quelconque des revendications précédentes, dans lequel l'organe de retenue (40) présente au moins une protubérance (42) à l'extrémité libre.

7. Dispositif (100) de maintien en position entrebâillée selon l'une quelconque des revendications 5 ou 6, dans lequel la zone élastiquement déformable (41) de l'organe de retenue (40) est positionnée à une extrémité opposée de l'extrémité libre.

8. Dispositif (100) de maintien en position entrebâillée selon l'une quelconque des revendications 5 ou 6, dans lequel la zone élastiquement déformable (41) de l'organe de retenue (40) est positionnée sensiblement au milieu de l'élongation.

9. Dispositif (100) de maintien en position entrebâillée selon l'une quelconque des revendications précédentes, dans lequel l'organe de liaison (30) est une élongation comportant une extrémité libre (341).

10. Dispositif (100) de maintien en position entrebâillée selon l'une quelconque des revendications précédentes, dans lequel l'organe de liaison (30) comprend au moins une butée (35) de fin de course permettant d'interdire à l'élément ouvrant (200) de venir dans une position complètement fermée sur la caisse du véhicule.

11. Dispositif (100) de maintien en position entrebâillée selon la revendication 9, dans lequel la zone élastiquement déformable (32) de l'organe de liaison (30) est positionnée à une extrémité opposée de l'extrémité libre (341).

12. Dispositif (100) de maintien en position entrebâillée selon la revendication 9, dans lequel la zone élastiquement déformable (32) de l'organe de liaison (30) est positionnée sensiblement au milieu de l'élongation.

13. Dispositif (100) de maintien en position entrebâillée selon l'une quelconque des revendications 1 à 12, **caractérisé en ce que** la zone élastiquement déformable (32) de l'organe de liaison (30) est conçue de manière à offrir une résistance différente aux contraintes exercées par l'organe de maintien présenté par la partie fixe ou l'élément ouvrant (200) que la zone élastiquement déformable (41) de l'organe de retenue (40).

## Patentansprüche

1. Vorrichtung (100) zum Halten eines Öffnungselements (200) in einer halboffenen Position an einem festen Abschnitt einer Karosserie eines Kraftfahrzeugs, umfassend ein Abstandselement (1), das dazu vorgesehen ist, an einem festen Abschnitt der Karosserie des Fahrzeugs oder am Öffnungselement (200) befestigt zu werden, wobei das Abstandselement (1) eine Basis (10) umfasst, die zur Befestigung des Abstandselements (1) am festen Abschnitt oder am Öffnungselement (200) vorgesehen ist,
**dadurch gekennzeichnet, dass** das Abstandselement (1) Folgendes umfasst:
- ein Verbindungselement (30), das an der Basis (10) angebracht ist und einen elastisch verformbaren Bereich (32) enthält, der dazu ausgestaltet ist, sich unter der Wirkung von Spannungen zu verformen, die von einem Halteelement ausgeübt werden, das von dem Öffnungselement (200) oder dem festen Abschnitt bereitgestellt wird,
- ein Rückhalteelement (40), das an dem Verbindungselement (30) angebracht ist und einen elastisch verformbaren Bereich (41) enthält, der dazu ausgestaltet ist, sich unter der Wirkung von Spannungen zu verformen, die vom Halteelement ausgeübt werden.

2. Vorrichtung (100) zum Halten in einer halboffenen Position nach Anspruch 1, wobei der elastisch verformbare Bereich (32) des Verbindungselements (30) dazu bestimmt ist, das Schwenken des Verbindungselements (30) in Bezug auf eine Drehachse zu ermöglichen.

3. Vorrichtung (100) zum Halten in einer halboffenen Position nach einem der vorhergehenden Ansprüche, wobei der elastisch verformbare Bereich (41) des Rückhalteelements (40) dazu bestimmt ist, das Schwenken des Rückhalteelements (40) in Bezug auf eine Drehachse zu ermöglichen.

4. Vorrichtung (100) zum Halten in einer halboffenen Position nach den Ansprüchen 2 und 3, wobei die Drehachse des Verbindungselements (30) parallel zur Drehachse des Rückhalteelements (40) verläuft.

5. Vorrichtung (100) zum Halten in einer halboffenen Position nach einem der vorhergehenden Ansprüche, wobei das Rückhalteelement (40) eine Verlängerung ist, die ein freies Ende enthält.

6. Vorrichtung (100) zum Halten in einer halboffenen Position nach einem der vorhergehenden Ansprüche, wobei das Rückhalteelement (40) am freien Ende mindestens einen Vorsprung (42) aufweist.

7. Vorrichtung (100) zum Halten in einer halboffenen Position nach einem der Ansprüche 5 oder 6, wobei der elastisch verformbare Bereich (41) des Rückhalteelements (40) an einem dem freien Ende gegenüberliegenden Ende positioniert ist.

8. Vorrichtung (100) zum Halten in einer halboffenen Position nach einem der Ansprüche 5 oder 6, wobei der elastisch verformbare Bereich (41) des Rückhalteelements (40) im Wesentlichen in der Mitte der Verlängerung positioniert ist.

9. Vorrichtung (100) zum Halten in einer halboffenen Position nach einem der vorhergehenden Ansprüche, wobei das Verbindungselement (30) eine Verlängerung ist, die ein freies Ende (341) enthält.

10. Vorrichtung (100) zum Halten in einer halboffenen Position nach einem der vorhergehenden Ansprüche, wobei das Verbindungselement (30) mindestens einen Endanschlag (35) umfasst, der es ermöglicht, zu verhindern, dass das Öffnungselement (200) in eine vollständig geschlossene Position an der Karosserie des Fahrzeugs gelangt.

11. Vorrichtung (100) zum Halten in einer halboffenen Position nach Anspruch 9, wobei der elastisch verformbare Bereich (32) des Verbindungselements (30) an einem Ende gegenüber dem freien Ende (341) positioniert ist.

12. Vorrichtung (100) zum Halten in einer halboffenen Position nach Anspruch 9, wobei der elastisch verformbare Bereich (32) des Verbindungselements (30) im Wesentlichen in der Mitte der Verlängerung positioniert ist.

13. Vorrichtung (100) zum Halten in einer halboffenen Position nach einem der Ansprüche 1 bis 12, **dadurch gekennzeichnet, dass** der elastisch verformbare Bereich (32) des Verbindungselements (30) derart ausgestaltet ist, dass er einen unterschiedlichen Widerstand gegen Spannungen, die von dem Halteelement ausgeübt werden, das von dem festen Abschnitt oder dem Öffnungselement (200) bereitgestellt wird, als der elastisch verformbaren Bereich (41) des Rückhalteelements (40) bietet.

## Claims

1. A device (100) for holding in a half-open position a door leaf element (200) on a fixed portion of a body of a motor vehicle, comprising a spacing element (1) provided to be fixed on a fixed portion of the vehicle body or on the door leaf element (200), this spacing element (1) comprising a base (10) provided for a fixation of the spacing element (1) on the fixed portion or on the door leaf element (200),
**characterized in that** the spacing element (1) comprises:
- a connecting member (30) attached to the base (10) and including an elastically deformable zone (32) designed to be deformed under the action of stresses exerted by a holding member presented by the door leaf element (200) or the fixed portion,
- a retaining member (40) attached to the connecting member (30) and including an elastically deformable zone (41) designed to be deformed under the action of stresses exerted by the holding member.

2. The holding device (100) in the half-open position according to claim 1, wherein the elastically deformable zone (32) of the connecting member (30) is intended to allow the pivoting of the connecting member (30) with respect to an axis of rotation.

3. The holding device (100) in the half-open position according to any one of the preceding claims, wherein the elastically deformable zone (41) of the retaining member (40) is intended to allow the pivoting of the retaining member (40) with respect to an axis of rotation.

4. The holding device (100) in the half-open position according to claims 2 and 3, wherein the axis of rotation of the connecting member (30) is parallel to the axis of rotation of the retaining member (40).

5. The holding device (100) in the half-open position according to any one of the preceding claims, wherein the retaining member (40) is an elongation including a free end.

6. The holding device (100) in the half-open position according to any one of the preceding claims, wherein the retaining member (40) has at least one protrusion (42) at the free end.

7. The holding device (100) in the half-open position according to any one of claims 5 or 6, wherein the elastically deformable zone (41) of the retaining member (40) is positioned at an opposite end to the free end.

8. The holding device (100) in the half-open position according to any one of claims 5 or 6, wherein the elastically deformable zone (41) of the retaining member (40) is positioned substantially in the middle of the elongation.

9. The holding device (100) in the half-open position according to any one of the preceding claims, wherein the connecting member (30) is an elongation including a free end (341).

10. The holding device (100) in the half-open position according to any one of the preceding claims, wherein the connecting member (30) comprises at least one stroke-end stop (35) allowing to prevent the door leaf element (200) to come into a completely closed position on the vehicle body.

11. The holding device (100) in the half-open position according to claim 9, wherein the elastically deformable zone (32) of the connecting member (30) is positioned at an end opposite to the free end (341).

12. The holding device (100) in the half-open position according to claim 9, wherein the elastically deformable zone (32) of the connecting member (30) is positioned substantially in the middle of the elongation.

13. The holding device (100) in the half-open position according to any one of claims 1 to 12, **characterized in that** the elastically deformable zone (32) of the connecting member (30) is designed so as to offer a resistance to the stresses exerted by the holding member presented by the fixed portion or the door leaf element (200) different from the elastically deformable zone (41) of the retaining member (40).
